# EUROPEAN PATENT APPLICATION

(11) **EP 2 407 924 A1**
(43) Date of publication of application: **18.01.2012**
(21) Application number: 11174227.6
(22) Date of filing: 15.07.2011
(51) Int. Cl.: G06T 5/00

(54) **Radiation image processing apparatus, radiation image processing method, and radiation image processing program**

(30) Priority: 16.07.2010 JP 2010161702; 11.07.2011 JP 2011152639
(71) Applicant: Fujifilm Corporation, Minato-ku Tokyo (JP)
(72) Inventor: MORITA, Junya, Kanagawa-ken (JP); YAMADA, Masahiko, Kanagawa-ken (JP); AKAHORI, Sadato, Kanagawa-ken (JP); TAKAHASHI, Tomoyuki, Kanagawa-ken (JP)
(74) Representative: Klunker . Schmitt-Nilson . Hirsch

(57) **Abstract**

An information obtaining means obtains imaging information related to states during imaging and positioning information related to positioning of breasts during imaging regarding a plurality of mammograms, which are targets of comparison. An image processing means administers image processes onto the plurality of mammograms based on predetermined image processing conditions. A judging means judges whether image processes are to be administered onto the plurality of mammograms according to the same image processing conditions, based on the imaging information and the positioning information.

## Description

### BACKGROUND OF THE INVENTION

### Field of the Invention

The present invention is related to a radiation image processing apparatus, a radiation image processing method, and a radiation image processing program, for administering image processing on radiation images, such as mammograms, when the radiation images are to be comparatively observed.

### Description of the Related Art

Recently, image diagnosis employing mammography apparatuses for imaging breasts is being focused on, in order to promote early detection of breast cancer. Radiation images of breasts (mammograms) imaged by mammography apparatuses undergo image processes at dedicated terminals or the like, and then are transmitted to servers and viewing terminals via networks. Physicians observe the mammograms transmitted to viewing terminals by causing them to be displayed on display screens, to perform diagnosis regarding the presence of disease, such as tumors and calcifications.

Here, the aforementioned image processes are performed such that the mammograms become easier to observe. Specifically, the image processes are performed according to image processing conditions, which are determined such that image properties of observation target regions, such as the density, the contrast, the gradation, the dynamic range, the frequency properties, and noise, become appropriate such that mammograms having desired image quality are obtained.

When diagnosis is performed using radiation images, it is a common practice to compare a plurality of images to observe changes and differences among the images. For example, a plurality of radiation images of a single patient which were imaged at different times may be displayed side by side by a high resolution display device, to perform diagnosis regarding the presence of disease, such as tumors or to perform diagnosis regarding the progression of disease. In addition, in the case of mammograms, diagnosis may be performed by comparing mammograms of the right and left breasts, which are often imaged at the same time.

However, in the case that a past image and a current image are imaged by different models of imaging apparatuses, or imaged by the same imaging apparatus under different imaging conditions, the image properties will greatly differ between the two images. There are cases in which differences in image properties become hindrances to comparative observation, resulting in deteriorations in the accuracy and efficiency of diagnoses. For this reason, various methods have been proposed for performing image processes on mammograms to be comparatively observed such that image properties are matched to cause images to appear in the same manner. For example, a technique has been proposed, in which image processes are administered such that image properties of corresponding regions are matched according to degrees of similarity of tissue and degrees of interest (Japanese Unexamined Patent Publication No. 2009-136376) . Another technique has been proposed, in which users are prompted to select whether radiation images to be comparatively observed are to undergo image processes using the same image processing conditions, or using individually set image processing conditions (Japanese Unexamined Patent Publication No. 2009-247521). Comparative observation can be performed with high accuracy, by administering image processes onto radiation images to be comparatively observed using the same image processing conditions in this manner.

In mammography however, states during imaging, such as the compression pressure of a breast, the thickness of the breast corresponding to the compression pressure, radiation dosage, the tube voltage of the radiation source, and the mammographic view (cranio caudal imaging, in which radiation is irradiated from above, medio lateral imaging, in which radiation is irradiated from the side, and medio lateral oblique imaging, in which radiation is irradiated from an oblique direction), differ for each imaging operation. In addition, the area of a breast region and the area of a pectoral muscle region differ according to positioning during imaging (the position and orientation of a patient, and an imaging range). For these reasons, the appearances of images will not be matched even if image processes are performed using the same image processing conditions, in the case the aforementioned states and the positioning during imaging differ among a plurality of mammograms to be comparatively observed. Therefore, there is a possibility that accurate image observation cannot be performed when performing comparative observation.

The technique disclosed in Japanese Unexamined Patent Publication No. 2009-247521 prompts users such as physicians to select whether radiation images are to undergo image processes using the same image processing conditions, or using individually set image processing conditions. Therefore, image processes can be performed by setting individual image processing conditions for each radiation image. However, the burden on users is great.

### SUMMARY OF THE INVENTION

The present invention has been developed in view of the foregoing circumstances. It is an object of the present invention to enable image processes that facilitate comparative image observation to be performed without burdening users.

A radiation image processing apparatus of the present invention is characterized by comprising:
information obtaining means, for obtaining imaging information related to states during imaging and positioning information related to positioning of breasts during imaging regarding a plurality of mammograms, which are targets of comparison;
image processing means, for administering image processes onto the plurality of mammograms based on predetermined image processing conditions; and
judging means, for judging whether image processes are to be administered onto the plurality of mammograms according to the same image processing conditions, based on the imaging information and the positioning information.

The "plurality of radiation images which are targets of comparison" may be mammograms of the left and right breasts of a single patient which are imaged within the same time period, or mammograms of a single patient which are imaged during different time periods.

The "predetermined image processing conditions" are constituted by various parameters for improving the image quality of the mammograms. Specific examples of such parameters are those that change the gradation, the contrast, the density, the frequency properties, and the noise properties of the mammograms.

In the radiation image processing apparatus of the present invention, the imaging information may be at least one piece of information regarding the compression pressure of the breast during obtainment of the mammograms, the thickness of the breast, the imaging radiation dosage, the tube voltage of the radiation source, whether the subject is a right or a left breast, and the mammographic view.

In the radiation image processing apparatus of the present invention, the positioning information may be at least one piece of information regarding the area of a breast region and the area of a pectoral muscle region.

A radiation image processing method of the present invention is characterized by comprising:
obtaining imaging information related to states during imaging and positioning information related to positioning of breasts during imaging regarding a plurality of mammograms, which are targets of comparison;
administering image processes onto the plurality of mammograms based on predetermined image processing conditions; and
judging whether image processes are to be administered onto the plurality of mammograms according to the same image processing conditions, based on the imaging information and the positioning information.

Note that the radiation image processing method of the present invention may be provided as a program that causes a computer to execute the method.

The present invention obtains imaging information and positioning information from a plurality of mammograms which are targets of comparison. Then, whether the plurality of mammograms are to undergo image processes using the same image processing conditions is judged based on the imaging information and the positioning information. Thereby, image processes are administered using the same image processing conditions on mammograms having substantially the same imaging information and substantially the same positioning information, while image processes are administered using individual image processing conditions suited on mammograms for which it is not favorable to administer image processes using the same image processing conditions. Accordingly, image processes suited for each of a plurality of mammograms can be administered without burdening users such as physicians, and as a result, comparative observation of the plurality of mammograms can be performed accurately.

### BRIEF DESCRIPTION OF THE DRAWINGS

Figure 1 is a block diagram that schematically illustrates the configuration of a system that includes a radiation image processing apparatus according to an embodiment of the present invention.
Figure 2 is a diagram that schematically illustrates the configuration of a mammography apparatus.
Figure 3 is a diagram that illustrates the interior structure of an imaging base of the mammography apparatus.
Figure 4 is a block diagram that schematically illustrates the functions of an image processing program executed by the radiation image processing apparatus.
Figure 5 is a diagram that illustrates an example of a mammogram.
Figure 6 is a diagram that illustrates an image, which is a mammogram divided into regions.
Figure 7 is a flow chart that illustrates the steps of a process performed by the radiation image processing apparatus.

### DESCRIPTION OF THE PREFERRED EMBODIMENTS

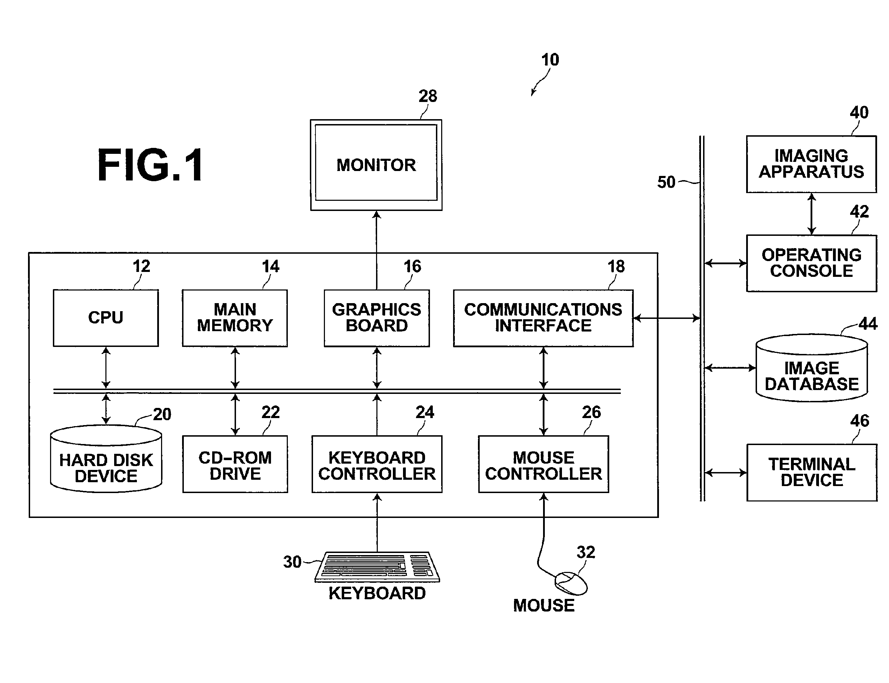

Hereinafter, an embodiment of the present invention will be described with reference to the attached drawings. Figure 1 is a block diagram that schematically illustrates the configuration of a system that includes a radiation image processing apparatus 10 according to an embodiment of the present invention. As illustrated in Figure 1, the system is constituted by: the radiation image processing apparatus 10 of the present invention; a mammography apparatus 40 installed in a medical facility or the like; an console 42 for operating the mammography apparatus 40; an image database 44 (image DB 44) that stores mammograms imaged by the mammography apparatus 40; and a terminal device 46 of a physician that performs image diagnosis, equipped with a high resolution monitor (not shown) .

The radiation image processing apparatus 10 is constituted by a computer such as a work station, equipped with: a central processing unit 12 (CPU 12) that controls the operations of each structural element; a main memory 14 that stores control programs for the apparatus and becomes a work area during execution of programs; a graphics board 16 that controls display of a monitor device 28, such as a liquid crystal display and a CRT display; a communications interface 18 (communications I/F 18) which is connected to a network 50 of the medical facility; a hard disk device 20 that stores various application software including a radiation image processing program of the present invention; a CD-ROM drive 22; a keyboard controller 24 for detecting key operations of a keyboard 30 and outputting them to the CPU 12 as input commands; and a mouse controller 26 for detecting the state of a mouse 32 as a positional input device and output signals indicating the position of a mouse pointer on the monitor device 28, signals indicating the state of the mouse, etc. to the CPU 12.

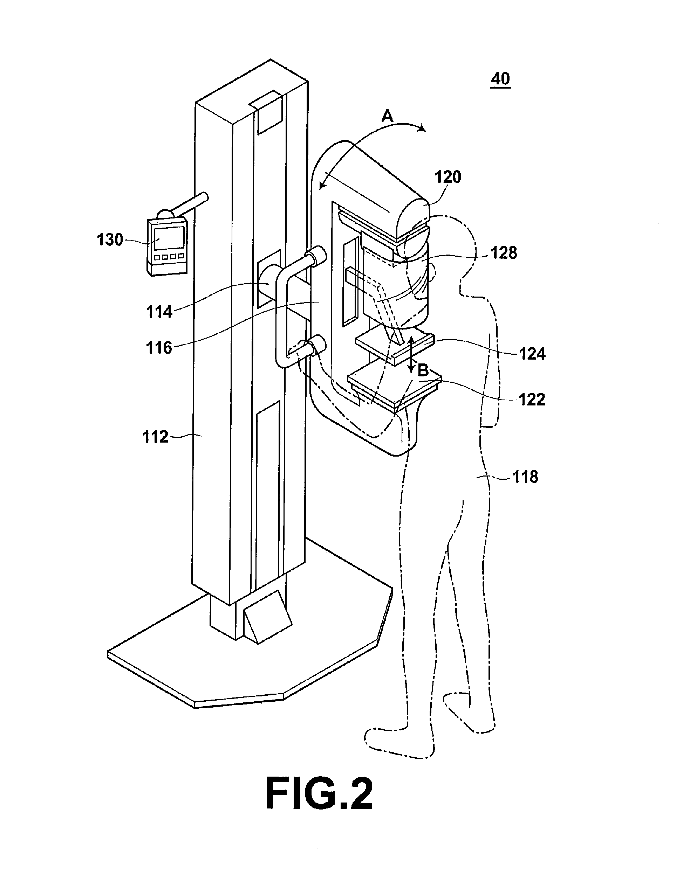

Figure 2 is a diagram that schematically illustrates the configuration of the mammography apparatus 40. As illustrated in Figure 2, the mammography apparatus 40 is equipped with: a base 112 which is installed in an upright state; an arm member 116 which is fixed to a rotating shaft 114 provided at the approximate center of the base 112; an X ray source housing section 120 that houses an X ray source for irradiating radiation (X rays) onto the breast of a subject 118 therein, fixed to an end of the arm member 116; an imaging base 122 that houses a detector that detects X rays which have passed through breasts and obtain X ray image data therein, fixed to the other end of the arm member 116; and a pressing plate 124 that compresses breasts against the imaging base 122.

The arm member 116, on which the X ray source housing section 120, the imaging base 122, and the pressing plate 124 are linked, rotate in the direction indicated by arrow A with the rotating shaft 114 as the center of rotation. Thereby, adjustment of mammographic views with respect to the breasts of the subject 118 is enabled. The pressing plate 124 is provided between the X ray source housing section 120 and the imaging base 122 in a state in which it is linked to the arm member 116, and is configured to be displaceable in the direction indicated by arrow B.

A face guard sheet 128 for protecting the face and vicinity of the subject 118 from X ray irradiation is provided on the X ray source housing section 120. In addition, a display device 130 that displays imaging information, such as the imaged portion of the subject 118 and the mammographic view, ID information of the subject 118, and if necessary, information regarding the remaining compression time, that is, the amount of time until the compression of the breast by the pressing plate 124 is released, is provided on the base 112.

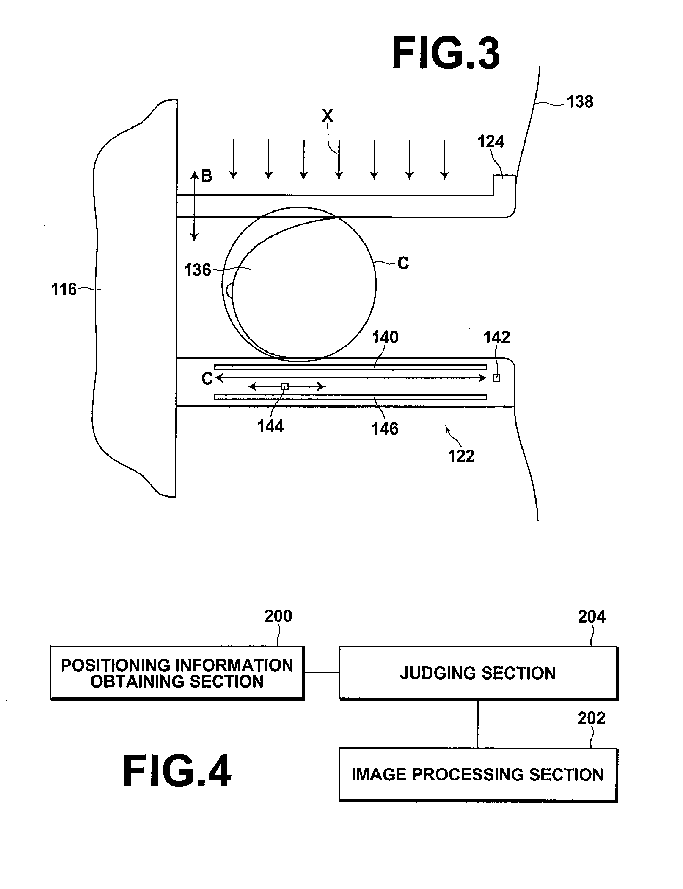

Figure 3 is a diagram that illustrates the interior structure of the imaging base 122 of the mammography apparatus 40. Figure 3 illustrates a state in which a breast 136, which is the portion of the subject 118 to be imaged, is placed between the imaging base 122 and the pressing plate 124. Note that reference number 138 denotes the chest wall of the subject 118.

The interior of the imaging base 122 includes: a detector 140 that stores X ray image information based on X rays which have passed through the breast 136 and outputs the X ray image information as electrical signals; a readout light source section 142 for irradiating readout light onto the detector 140 in order to read out the X ray image information stored thereon; a dosage detector 144 (hereinafter, referred to as AEC (Automatic Exposure Control) sensor 144), for detecting the dosage of X rays which have passed through the breast 136, in order to determine amounts of irradiation time, which is an X ray irradiation condition; and an erasing light source section 146 for irradiating erasing light onto the detector 140 in order to erase the unnecessary electric charges stored thereon.

The detector 140 is a direct conversion optical readout X ray detector that stores X ray image information based on X rays which have passed through the breast 136 as an electrostatic latent image. The detector 140 generates current corresponding to the electrostatic latent image by being scanned with the readout light from the readout light source section 142.

The readout light source section 142 is equipped with: a line light source constituted by a plurality of LED chips which are arranged in a single row; and an optical system that irradiates the readout light output from the line light source onto the detector 140 as a line; for example. The readout light source section 142 exposes and scans the entire surface of the detector 140, by moving the line light source, in which the LED chips are arrayed in a direction perpendicular to the direction in which linear electrodes of a second conductive layer of the detector 140 extend, in the direction in which the linear electrodes extend (the direction indicated by arrow C).

The AEC sensor 144 is configured to be movable along the detector 140 in the direction indicated by arrow C, such that it can be moved to positions corresponding to a portion of the breast 136 having high mammary gland densities to detect X ray dosages, for example. The erasing light source section 146 may be constituted by arranging LED chips that emit and extinguish light within short periods of time and have extremely small amounts of residual light two dimensionally.

X rays which have passed through the breast 136 are detected by the detector 140 as X ray image information, and an X ray image of the breast 136 (a mammogram) is formed by an X ray image forming section (not shown). Erasing light is irradiated onto the detector 140, from which the X ray image information has been read out, by the erasing light source section 146, to erase the remaining X ray image information.

In the case that imaging of the breast of the subject 118 is performed, the subject 118 is positioned, and imaging is performed by operating the console 42 (refer to Figure 1). In addition, the console 42 is equipped with an input means for inputting subject identification information (subject ID) for identifying the subject and an operator ID for identifying the operator. The input subject ID, the input operator ID, and the mammogram obtained by the mammography apparatus 40 are correlated and stored in the image DB 44.

Note that mammograms may be stored as image files (DICOM files) in the DICOM (Digital Image and Communication in Medicine) format. In this case, information, such as the subject ID, the operator ID, the imaging date, and the imaging facility are recorded in the headers of the DICOM files. In the present embodiment, mammograms are stored in the image DB 44 as DICOM files. In this case, imaging information and positioning information, which will be described later, are also recorded in the header of the DICOM files.

Note that the detector 140 is not limited to the direct conversion optical readout type. The detector 140 may alternatively be an imaging plate IP having stimulable phosphors (a stimulable phosphor sheet) or a flat panel X ray detector FPD (Flat Panel Detector), in which a great number of X ray detecting elements that utilize semiconductors or the like are arranged two dimensionally on an X ray detecting surface.

Next, positioning of the subject and imaging procedures will be described. An operator (a radiology technician) sets the mammography apparatus 40 to a predetermined state according to a specified imaging method. With respect to mammographic views for the breast 136, for example, there are cranio caudal (CC) imaging, in which radiation is irradiated from above, medio lateral (ML) imaging, in which radiation is irradiated from the side, and medio lateral oblique (MLO) imaging, in which radiation is irradiated from an oblique direction. The arm member 116 is caused to rotate about the rotating shaft 114 according to the specified mammographic view. Note that Figure 2 illustrates a case in which cranio caudal (CC) imaging is to be performed.

When the above preparations are complete, the subject 118 is guided to the mammography apparatus 40, and positioning of the breast 136 is initiated. That is, the radiology technician places the breast 136 on the imaging base 122, turns a pressing plate movement switch (not shown) ON, to cause the pressing plate 124 to move in the direction indicated by arrow B (refer to Figure 2) with respect to the imaging base 122 and to gradually compress the breast 136.

When a pressure sensor (not shown) detects that a compression pressure necessary for imaging is reached, movement of the pressing plate 124 is ceased, and an enable imaging signal is output. Then, the radiology technician turns an irradiation switch (not shown) ON, to perform radiation imaging of the breast 136.

When mammography is completed, compression of the breast 136 is released, by causing the pressing plate 124 to move in a direction away from the imaging base 122. Note that during imaging of the breast 136, a plurality of imaging operations are performed for a single subject 118, such as CC imaging, ML imaging, and MLO imaging of both the right and left breasts 136 of the subject 118.

Imaging information is recorded in the headers of the DICOM files of the mammograms obtained by imaging. The imaging information is pieces of information related to the state during imaging of the breast. Specifically, the imaging information includes pieces of information regarding the compression pressure of the breast during obtainment of the mammograms, the thickness of the breast, the imaging radiation dosage, the tube voltage of the radiation source, whether the subject is a right or a left breast, and the mammographic view.

Next, the image processes performed by the radiation image processing apparatus 10 will be described. Figure 4 is a block diagram that schematically illustrates the functions of an image processing program executed by the radiation image processing apparatus 10. As illustrated in Figure 4, the functions of the image processing program executed by the radiation image processing apparatus 10 are executed by a positioning information obtaining section 200, an image processing section 202 and a judging section 204.

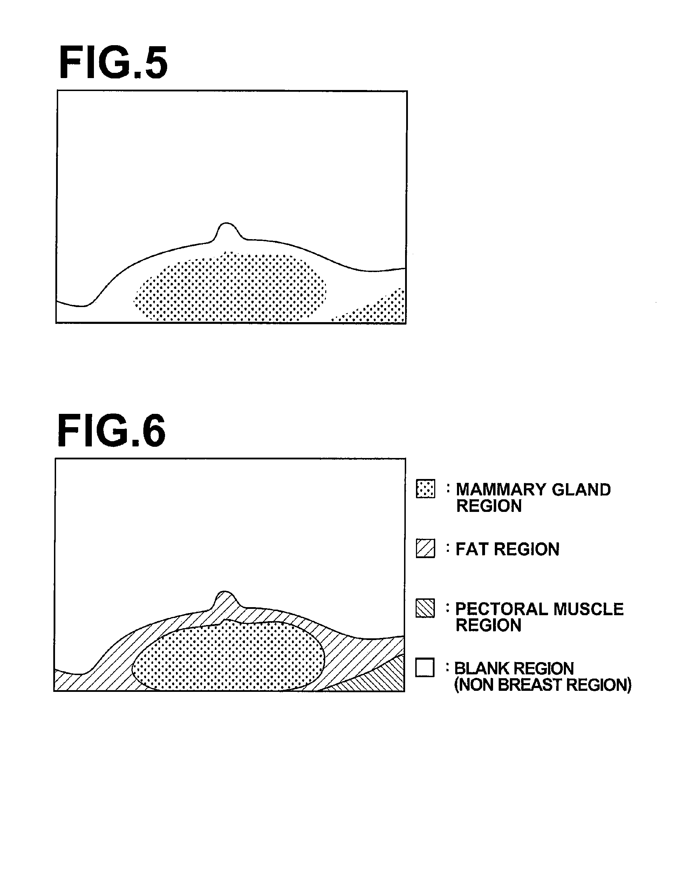

The positioning information obtaining section 200 divides mammograms into regions employing the technique disclosed in Japanese Unexamined Patent Publication No. 2005-65855, for example. Then, the positioning information obtaining section 200 detects a breast region and a pectoral muscle region, and obtains the area of the breast region and the area of the pectoral muscle region as pieces of positioning information related to the position of the breast during imaging. Figure 5 is a diagram that illustrates an example of a mammogram, and Figure 6 is a diagram that illustrates a mammogram divided into regions. The mammogram illustrated in Figure 5 can be divided into regions corresponding to structures (an entire breast region, a mammary gland region, a fat region, a pectoral muscle region, and a blank region (non breast region)), as illustrated in Figure 6. in the present embodiment, the breast region and the pectoral muscle region are necessary. Therefore, here, division into the breast region and the pectoral muscle region will be described.

First, the positioning information obtaining section 200 divides a mammogram into a breast region and a blank region. The blank region exhibits particularly high density within the image. Therefore, a peak that appears in the high density side of a density histogram of the entire image corresponds to the blank region. The positioning information obtaining section 200 performs a binarizing process employing a value, which is calculated by subtracting a predetermined value from the peak value, as a threshold value to divide the mammogram into a breast region and a blank region. Alternatively, searching may be performed from the high density side within a density histogram, and the first point having a value beneath a previously defined value may be employed as the threshold value for performing the binarizing process.

Next, the positioning information obtaining section 200 extracts a skin line, which is the outline of the breast region. Boundary points between the breast region and the blank region are sequentially searched for, and the pixels at the boundary points are connected to extract the skin line.

Meanwhile, with respect to the pectoral muscle region, the boundary between the pectoral muscle region and the fat region has a comparatively clear edge. Therefore, a differential operator performs scanning from the skin line toward the chest wall, and points having large differential values are extracted as boundary points with the pectoral muscle region. Then, a curve that connects the extracted boundary points is calculated, and the side of the curve toward the chest wall (the side opposite the blank region) is detected as the pectoral muscle region. Note that the areas of the breast region and the pectoral muscle region are calculated by counting the number of pixels within each of the regions.

Here, the positioning information obtaining section 200 calculates the area of the breast region and the area of the pectoral muscle region prior to storing the imaged mammograms into the image DB 44. Then, the calculated area of the breast region and the calculated area of the pectoral muscle region are recorded in the headers of the mammogram DICOM files. Note that an alternative configuration may be adopted, wherein the area of the breast region and the area of the pectoral muscle region are calculated from mammograms which are targets of observation, when image observation commands are input.

The image processing section 202 analyzes mammograms, calculates pixel values and contrast values within breast regions, and sets image processing conditions for image processes to be administered on the mammograms. For example, histogram analysis is performed utilizing pixels within the breast region, or utilizing only pixels within the breast region that have mammary gland inclusion rates greater than or equal to a predetermined threshold value, to set the image processing conditions. Note that the setting of the image processing conditions is performed by determining amounts of gradation shift such that the pixel values of the calculated breast region become predetermined values, determining the slopes of gradation according to calculated contrast values (determining gradation parameters), etc. In addition, other parameters, such as: density parameters that set the brightness of the mammograms as a whole; frequency processing parameters that determine frequency processing conditions; and noise removing parameters that set noise removing conditions; are set. Further, the intensity of a dynamic range compressing process for preventing overexposure and underexposure of pixel values within the breast regions is set as a dynamic range parameter. The image processing section 202 administers image processes according to image processing conditions constituted by the various set parameters, to generate processed images.

The judging section 204 judges whether a plurality of mammograms are to undergo image processes using the same image processing conditions, in response to a command from the terminal device 46, when comparative observation is to be performed between the mammograms of the left and right breast of a single patient, or among a plurality of mammograms of a single patient obtained at different times at the terminal device 46. Specifically, the judging section 204 judges whether image processes are to undergo image processes using the same image processing conditions, based on the imaging information attached to the mammograms, and the positioning information obtained by the positioning information obtaining section 200.

In mammography, states during imaging, such as the compression pressure of a breast, the thickness of the breast corresponding to the compression pressure, radiation dosage, the tube voltage of the radiation source, and the mammographic view, differ for each imaging operation. In addition, the area of a breast region and the area of a pectoral muscle region differ according to positioning during imaging. For these reasons, the image quality of mammograms will differ if image processes are performed using the same image processing conditions, depending on the states during imaging and the positioning during imaging differ among a plurality of mammograms to be comparatively observed. As a result, there is a possibility that accurate image observation cannot be performed when performing comparative observation.

For this reason, the judging section 204 evaluates the imaging information and the positioning information of mammograms to be compared. That is, the judging section 204 compares the compression pressures of breasts, the thicknesses of breasts corresponding to the compression pressure, radiation dosages, tube voltages of the radiation source, and the mammographic views included in the imaging information. In addition, the judging section 204 compares the areas of the breast regions and the areas of the pectoral muscle regions included in the positioning information. Then, the differences between the compression pressures of breasts, the thicknesses of breasts corresponding to the compression pressure, radiation dosages, tube voltages of the radiation source, the mammographic views, the right and left breasts, the areas of the breast regions, and the areas of the pectoral muscle regions are judged as a whole, to judge whether image processes are to be administered using the same image processing conditions.

Specifically, the judging section 204 calculates evaluation values for each of the differences between the compression pressures of breasts, the thicknesses of breasts corresponding to the compression pressure, radiation dosages, tube voltages of the radiation source, the mammographic views, the right and left breasts, the areas of the breast regions, and the areas of the pectoral muscle regions. The evaluation values are compared against predetermined threshold values. In cases that the evaluation values are less than the threshold values, it is judged that image processes are to be administered using the same image processing conditions, and in other cases, it is judged that image processing conditions are to be set individually.

In the case that it is judged that image processes are to be administered using the same image processing conditions, the image processing section 202 sets image processing conditions based on one of the mammograms from among the plurality of mammograms to be comparatively observed. Then, the set image processing conditions are used to perform image processes on all of the mammograms. On the other hand, in the case that it is judged that image processing conditions are not to be administered using the same image processing conditions, the image processing section 202 sets image processing conditions based on each of the mammograms to be comparatively observed individually. Then, the individually set image processing conditions are used to perform image processing on each of the mammograms.

Note that the CPU 12 functions as the positioning information obtaining section 200, the image processing section 202, and the judging section 204 of the radiation image processing apparatus 10 by executing the image processing program.

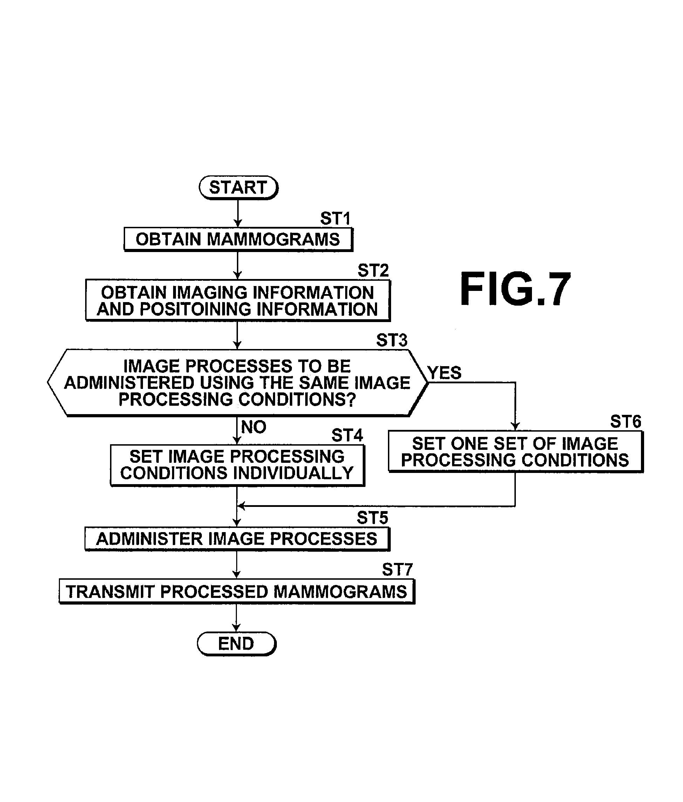

Next, the steps of a process performed by the radiation image processing apparatus 10 of the present embodiment will be described. Figure 7 is a flow chart that illustrates the steps of the process performed by the radiation image processing apparatus 10. Note that here, a process which is performed in the case that comparative observation is performed at the terminal device 46 using mammograms which are stored in the image DB 44 will be described. Note that the mammograms to be comparatively observed may be the left and right breasts of a single patient which were obtained during the same time period, or two mammograms of the same patient having different imaging time periods. The CPU 12 initiates the process when a comparative observation command is input from the terminal device 46. First, two mammograms which are the targets of comparative observation are obtained from the image DB 44 (step ST1). Then, the CPU 12 obtains imaging information and positioning information regarding the two mammograms (step ST2). Further, the CPU 12 judges whether image processes are to be administered on the two mammograms using the same image processing conditions, based on the imaging information and the positioning information (step ST3).

If the result of judgment at step ST3 is negative, the CPU 12 sets image processing conditions individually for each of the two mammograms (step ST4), then obtains processed mammograms by administering image processes on the two mammograms using the set image processing conditions (step ST5). On the other hand, if the result of judgment at step ST3 is affirmative, the CPU 12 sets image processing conditions using only one of the mammograms (step ST6) then administers the same image processes on the two mammograms using the set image processing conditions, to obtain processed mammograms (step ST5).

Then, the CPU 12 transmits the processed mammograms to the terminal device 4 6 (step ST7), and the process ends. The transmitted mammograms are displayed on the monitor of the terminal device 46, and a physician performs comparative observation.

As described above, the radiation image processing apparatus of the present embodiment obtains imaging information and positioning information from a plurality of mammograms which are targets of comparison. Then, whether the plurality of mammograms are to undergo image processes using the same image processing conditions is judged based on the imaging information and the positioning information. Thereby, image processes are administered using the same image processing conditions on mammograms having substantially the same imaging information and substantially the same positioning information, while image processes are administered using individual image processing conditions suited on mammograms for which it is not favorable to administer image processes using the same image processing conditions. Accordingly, image processes suited for each of a plurality of mammograms can be administered without burdening users such as physicians, and as a result, comparative observation of the plurality of mammograms can be performed accurately.

Note that in the embodiment described above, the imaging information included pieces of information regarding the compression pressure of the breast during obtainment of the mammograms, the thickness of the breast, the imaging radiation dosage, the tube voltage of the radiation source, whether the subject is a right or a left breast, and the mammographic view. Alternatively, at least one of these pieces of information may be employed as the imaging information. In addition, the positioning information included both the area of the breast region and the area of the pectoral muscle region. Alternatively, at least one of these pieces of information may be employed as the positioning information. In addition, any other piece of information related to the state during imaging and any other piece of information related to the positioning of the breast during imaging may be employed as the imaging information and the positioning information.

In the embodiment described above, image processes are administered onto all of the mammograms using image processing conditions, which are set for one of the mammograms from among the plurality of mammograms to be comparatively observed, in the case that it is judged that image processes are to be performed according to the same image processing conditions. Alternatively, image processing conditions may be calculated for each of the plurality of mammograms, the calculated image processing conditions may be averaged, and the same image processes may be administered onto all of the mammograms using the averaged image processing conditions. Specifically, average values maybe calculated for eac of the various parameters set for each of the mammograms, and the same image processes may be administered onto all of the mammograms using the averaged parameters.

In addition, information regarding histograms, contrast values, frequency properties, noise properties, and dynamic ranges of the mammograms (hereinafter, each piece of such information will be referred to analysis information) is calculated when the image processing conditions are set. In the case that it is judged that image processes are to be administered using the same iamge processing conditions, at least one of the pieces of analysis information calculated from the plurality of mammograms may be combined, and the same image processes may be administered on all of the mammograms using image processing conditions which are calculated using the combined analysis information. Note that the term "combine" as used here refers to calculating averages of at least one piece of analysis information (histograms, for example) regarding each of a plurality of mammograms, among the pulraliyt of mammograms.

Further, the present invention is not limited to the embodiment described above. Various improvements and modifications are possible as long as they do not stray from the spirit and the scope of the inventions claimed below.

## Claims

1. A radiation image processing apparatus, **characterized by** comprising:
information obtaining means (200), for obtaining imaging information related to states during imaging and positioning information related to positioning of breasts during imaging regarding a plurality of mammograms, which are targets of comparison;
image processing means (202), for administering image processes onto the plurality of mammograms based on predetermined image processing conditions; and
judging means (204), for judging whether image processes are to be administered onto the plurality of mammograms according to the same image processing conditions, based on the imaging information and the positioning information.

2. A radiation image processing apparatus as defined in Claim 1, **characterized by**:
the imaging information being at least one piece of information regarding the compression pressure of the breast during obtainment of the mammograms, the thickness of the breast, the imaging radiation dosage, the tube voltage of the radiation source, whether the subject is a right or a left breast, and the mammographic view.

3. A radiation image processing apparatus as defined in Claim 1 or Claim 2, **characterized by**:
the positioning information being at least one piece of information regarding the area of a breast region and the area of a pectoral muscle region.

4. A radiation image processing apparatus as defined in any one of Claim 1 through Claim 3, **characterized by**:
the plurality of radiation images which are targets of comparison are one of mammograms of the left and right breasts of a single patient which are imaged within the same time period, and mammograms of a single patient which are imaged during different time periods.

5. A radiation image processing apparatus as defined in any one of Claim 1 through Claim 4, **characterized by**:
the image processing conditions being constituted by various parameters for improving the image quality of the mammograms.

6. A radiation image processing apparatus as defined in Claim 5, **characterized by**:
the parameters being those that change at least one of the gradation, the contrast, the density, the frequency properties, and the noise properties of the mammograms.

7. A radiation image processing method, **characterized by** comprising:
obtaining imaging information related to states during imaging and positioning information related to positioning of breasts during imaging regarding a plurality of mammograms, which are targets of comparison;
administering image processes onto the plurality of mammograms based on predetermined image processing conditions; and
judging whether image processes are to be administered onto the plurality of mammograms according to the same image processing conditions, based on the imaging information and the positioning information.

8. A radiation image processing program, **characterized by** causing a computer to execute the procedures of:
obtaining imaging information related to states during imaging and positioning information related to positioning of breasts during imaging regarding a plurality of mammograms, which are targets of comparison;
administering image processes onto the plurality of mammograms based on predetermined image processing conditions; and
judging whether image processes are to be administered onto the plurality of mammograms according to the same image processing conditions, based on the imaging information and the positioning information.
